# EUROPÄISCHE PATENTANMELDUNG

(11) **EP 4 741 677 A1**
(43) Veröffentlichungstag der Anmeldung: **13.05.2026**
(21) Anmeldenummer: 25197696.5
(22) Anmeldetag: 22.08.2025
(51) Int. Cl.: F16D 65/18

(54) **ELEKTROMAGNETISCHES ERREGERSYSTEM, ELEKTROMAGNETISCHE BREMSE ODER KUPPLUNG UND VERFAHREN ZUM HERSTELLEN EINES ELEKTROMAGNETISCHEN ERREGERSYSTEMS**

(30) Priorität: 07.11.2024 DE 102024132451
(71) Anmelder: Kendrion (Villingen) GmbH, 78048 Villingen-Schwenningen (DE)
(72) Erfinder: Hubrich, Joachim, 78166 Donaueschingen (DE); Quartarone, Salvatore, 78609 Tuningen (DE)
(74) Vertreter: Westphal, Mussgnug & Partner Patentanwälte mbB

(57) **Zusammenfassung**

Die vorliegende Erfindung betrifft ein elektromagnetisches Erregersystem (1) für eine elektromagnetischen Bremse (2) oder Kupplung, aufweisend einen Elektromagneten (10) und einen Permanentmagneten (40), wobei der Elektromagnet (10) ein um eine Längsachse (L) topfförmiges und ringförmiges Gehäuse (20) mit einem Innenringabschnitt (22), einem Außenringabschnitt (24), einem den Innenringabschnitt (22) und den Außenringabschnitt (24) verbindenden Bodenabschnitt (26) und einer Erregerspule (30) umfasst, wobei die Erregerspule (30) in das Gehäuse (20) zwischen den Innenringabschnitt (22) und den Außenringabschnitt (24) eingesetzt ist, und wobei ein freies Ende des Außenringabschnitts (24) einen Magnetpol (15) bildet, wobei der Permanentmagnet (40) auf der von der Erregerspule (30) abgewandten Seite auf einem Flansch (50) angeordnet ist, und wobei der Flansch (50) auf der von dem Bodenabschnitt (26) abgewandten Seite der Erregerspule (30) angeordnet ist und von dem Innenringabschnitt (22) zum Außenringabschnitt (24) unter Ausbildung eines Luftspaltes (60) zwischen dem Flansch (50) und dem Außenringabschnitt (24) absteht.

## Beschreibung

Die vorliegende Erfindung betrifft ein elektromagnetisches Erregersystem mit den Merkmalen des Patentanspruchs 1, eine elektromagnetische Bremse oder Kupplung mit den Merkmalen des Patentanspruchs 9 sowie ein Verfahren zur Herstellung einer elektromagnetischen Bremse mit den Merkmalen des Patentanspruchs 11.

Elektromechanische Bremsen oder Kupplungen sind aus dem Stand der Technik in unterschiedlichen Ausgestaltungen bekannt. Im Stand der Technik werden gattungsgemäße elektromechanische Bremsen beispielsweise als Permanentmagnetbremsen oder Federdruckbremsen verwendet und umfassen ein elektromagnetisches Erregersystem mit einem Elektromagneten, das mit einer Ankerplatte zusammenwirken kann, um ein tribologisches System der Bremse oder Kupplung zu betätigen bzw. in Reibkontakt zu bringen.

Typischerweise umfasst der Elektromagnet ein topf- und ringförmiges Gehäuse, das um eine Längsachse und eine Welle, z.B. die Welle eines Servomotors, angeordnet werden kann. Das Gehäuse weist einen Innenringabschnitt und einen Außenringabschnitt auf, und zwischen dem Innenringabschnitt und dem Außenringabschnitt ist eine Erregerspule in das Gehäuse eingesetzt. Die freien Enden des Innenringabschnittes und des Außenringabschnittes bilden die Magnetpole des Elektromagneten und ebenso die Reibflächen, weshalb elektromechanische Gattungsbremsen oder -kupplungen auch als Polreibungsbremsen oder -kupplungen bezeichnet werden.

Im Stand der Technik werden auch Permanentmagnete als Rückstellmittel eingesetzt. Im stromlosen Zustand des Elektromagneten wird beispielsweise die Bremse durch die Permanentmagnete betätigt, um z.B. bei Stromausfall einen Nothalt zu erreichen.

Weiteren Stand der Technik bilden die Druckschriften US 2023 296 140 A1, DE 20 2004 001 042 U1 und DE 199 46 084 A1.

Derartige elektromagnetische Bremsen oder Kupplungen haben sich in der Vergangenheit bewährt, allerdings sind die bekannten elektromagnetischen Bremsen oder Kupplungen relativ lang in der Baulänge und aufwendig in der Herstellung.

Der vorliegenden Erfindung liegt daher die Aufgabe zugrunde, ein in geeigneter Weise verbessertes elektromagnetisches Erregersystem für eine elektromagnetische Bremse oder Kupplung, eine verbesserte elektromagnetische Bremse oder Kupplung und ein Verfahren zur Herstellung eines in geeigneter Weise verbesserten elektromagnetischen Erregersystems vorzuschlagen, das die aus dem Stand der Technik bekannten Nachteile beseitigt.

Diese Aufgaben werden durch ein elektromagnetisches Erregersystem mit den Merkmalen des Patentanspruchs 1, eine elektromagnetische Bremse oder Kupplung mit den Merkmalen des Patentanspruchs 9 sowie ein Verfahren zur Herstellung einer elektromagnetischen Bremse mit den Merkmalen des Patentanspruchs 11 gelöst.

Weiterbildungen der Erfindung sind in den Unteransprüchen angegeben.

Das erfindungsgemäße elektromagnetische Erregersystem für eine elektromagnetische Bremse oder Kupplung mit den Merkmalen des Anspruchs 1 weist einen Elektromagneten und einen Permanentmagneten auf.

Der Elektromagnet umfasst ein um eine Längsachse angeordnetes topf- und ringförmiges Gehäuse und eine Erregerspule.

Das topf- und ringförmige Gehäuse weist einen Innenringabschnitt, einen Außenringabschnitt und einen den Innenringabschnitt und den Außenringabschnitt verbindenden Bodenabschnitt auf.

Darüber hinaus ist in das Gehäuse zwischen dem Innenringabschnitt und dem Außenringabschnitt die Erregerspule eingesetzt und ein freies Ende des Außenringabschnitts bildet einen Magnetpol.

Weiterhin ist vorgesehen, dass der Permanentmagnet auf der von der Erregerspule abgewandten Seite auf einem Flansch angeordnet ist. Der Flansch kann weiterhin auf der von dem Bodenabschnitt abgewandten Seite der Erregerspule angeordnet sein und kann von dem Innenringabschnitt zum Außenringabschnitt unter Ausbildung eines Luftspaltes zwischen dem Flansch und dem Außenringabschnitt abstehen.

Die vorliegende Erfindung beruht auf der Idee, ein elektromagnetisches Erregersystem mit einer besonders kompakten Bauweise vorzuschlagen. Anders als beispielsweise in der WO 2006 087 017 A1 ist der Permanentmagnet nicht hülsenförmig um die Längsachse mit einer radialen Magnetisierung ausgebildet, sondern scheiben oder scheibenringförmig und vorzugsweise axial magnetisiert.

In einem unbestromten Zustand des Elektromagneten teilen sich die Feldlinien in dem Flansch in einen Magnetkreis durch das Gehäuse um die Erregerspule in einen Hauptfluss und einen Nebenfluss durch den Luftspalt. In dem Außenringabschnitt vereinigen sich der Hauptfluss und der Nebenfluss und fließen zurück zum Permanentmagnet.

In einem bestromten Zustand des Elektromagneten verdrängt, leitet um oder neutralisiert das magnetische Feld der Erregerspule das magnetische Feld des Permanentmagneten im Bereich des Magnetpols und der Ankerplatte. Wenn z.B. das elektromagnetische Erregungssystem in einer Bremse verwendet wird, kann die Bremse durch Bestromen des Elektromagneten gelüftet werden. Das heißt die Bremse öffnet und die z.B. Motorwelle könnte sich wieder drehen.

Darüber hinaus hat es sich als vorteilhaft erwiesen, wenn der Luftspalt als magnetischer Widerstand und als Nebenluftspalt in einem Magnetkreis des Permanentmagneten wirkt. Insbesondere wirkt der Luftspalt als magnetischer Widerstand und als Nebenluftspalt in dem Magnetkreis des Permanentmagneten, wenn der Elektromagnet nicht bestromt wird.

Eine Weiterbildung der vorliegenden Erfindung sieht vor, dass der Permanentmagnet und/oder ein freies Ende des Innenringabschnitts gegenüber dem freien Ende des Außenringabschnitts bzw. dem Magnetpol in der Längsachse in das Gehäuse zurückversetzt angeordnet ist. Mit anderen Worten ausgedrückt ist ein Abstand zwischen dem Permanentmagnet und der Erregerspule und/oder ein Abstand zwischen dem freien Ende des Innenringabschnitts und der Erregerspule kleiner als ein Abstand zwischen dem Magnetpol und der Erregerspule. Die erwähnten Abstände werden entlang der Längsachse bzw. parallel zu dieser gemessen. Demnach kommt die Ankerplatte im geschlossenen Zustand der Bremse nur mit dem Magnetpol bzw. dem freien Ende des Außenringabschnittes in Kontakt. Aus diesem Grund kann der Magnetpol auch als Einzelpol bezeichnet werden.

Darüber hinaus hat es sich als vorteilhaft erwiesen, wenn der Flansch in das Gehäuse eingesetzt wird. Vorzugsweise ist der Flansch in das Gehäuse eingepresst und mit dem Innenringabschnitt durch eine Pressverbindung verbunden, wodurch der magnetische Widerstand zwischen Gehäuse und Flansch gering gehalten wird. Darüber hinaus kann eine solche Verbindung kostengünstig und insbesondere ohne weitere Befestigungsmittel realisiert werden. Durch das Einsetzen des Flansches in das Gehäuse wird außerdem die Erregerspule verliersicher und vor äußeren Einflüssen geschützt in dem Gehäuse angeordnet.

Alternativ kann der Flansch an dem Gehäuse durch Kleben, Klemmen, Schweißen, Löten oder mittels weiterer Befestigungsmittel wie Schrauben, Nieten, o.Ä. befestigt werden. Auch kann der Flansch an dem Gehäuse durch eine Rändelverbindung befestigt bzw. angeordnet werden.

Weiterhin hat es sich als vorteilhaft erwiesen, wenn der Permanentmagnet ein Hartferrit, ein Samarium-Kobalt-Magnet, ein Neodym-Eisen-Bor-Magnet, ein kunststoffgebundener Hartferrit oder ein kunststoffgebundener Neodym-Eisen-Bor-Magnet ist. Solche Magnete sind ausreichend stark und haben sich in vielen Anwendungen bewährt.

Nach Maßgabe einer Weiterbildung der vorliegenden Erfindung wird der Permanentmagnet auf den Flansch geklebt, aufgespritzt oder aufgesintert. Insbesondere ist es vorteilhaft, wenn der Permanentmagnet aufgespritzt oder aufgesintert wird, da so bevorzugter Weise keine zusätzlichen Befestigungsmittel benötigt werden. So haben sich beispielsweise kunststoffgebundene Permanentmagneten als vorteilhaft erwiesen, da diese auf einfache Weise durch Aufspritzen auf dem Flansch aufgetragen werden kann und es werden keine zusätzlichen Befestigungsmittel benötigt.

Weiterhin hat es sich als vorteilhaft erwiesen, wenn das Gehäuse mit dem Innenringabschnitt, dem Außenringabschnitt und dem Bodenabschnitt einstückig ausgebildet ist. Das Gehäuse besteht vorzugsweise aus einem weichmagnetischen Werkstoff, der gut magnetisierbar ist. Darüber hinaus hat es sich als vorteilhaft erwiesen, wenn auch der Flansch aus einem weichmagnetischen Werkstoff hergestellt ist, der ebenfalls gut magnetisierbar ist.

Eine Weiterbildung der vorliegenden Erfindung sieht vor, dass die Erregerspule einen Spulenträger und Spulenwicklungen umfasst. Die Spulenwicklungen sind bevorzugt auf den Spulenträger aufgewickelt, wobei der Spulenträger bevorzugt einen elektrisch isolierenden Werkstoff, beispielsweise einen Kunststoff, umfasst oder aus einem elektrisch isolierenden Werkstoff hergestellt ist.

Darüber hinaus hat es sich als vorteilhaft erwiesen, wenn der Spulenträger mindestens einen Deformationsbereich aufweist, der beim Einsetzen der Erregerspule in das Gehäuse zur Erzeugung eines Kraftschlusses zwischen der Erregerspule unter dem Gehäuse verformt wird.

Der mindestens eine Deformationsbereich kann mindestens eine Erhebung oder mindestens eine Noppe umfassen.

Der mindestens eine Deformationsbereich kann insbesondere einen wellenförmig ausgebildeten Abschnitt - bevorzugt mit einer auf der von den Spulenwicklungen abgewandten Seite abstehenden Erhebung - umfassen, wobei die Erhebung beim Einsetzen der Erregerspule in das Gehäuse eingedrückt wird und eine Verformung des Spulenträgers verursacht, die zu einem Kraftschluss zwischen der Erregerspule und dem Gehäuse führt.

Ein weiterer Aspekt der vorliegenden Erfindung betrifft eine elektromagnetische Bremse oder Kupplung mit einem zuvor beschriebenen elektromagnetischen Erregersystem, wobei eine mit dem Elektromagneten und dem Permanentmagneten zusammenwirkende Ankerplatte angeordnet ist, die in der Längsachse verschiebbar ist.

Die vorliegende elektromagnetische Bremse oder Kupplung ermöglicht eine besonders kompakte Bauweise. Anders als beispielsweise in der WO 2006 087 017 A1 ist der Permanentmagnet nicht hülsenförmig um die Längsachse mit einer radialen Magnetisierung ausgebildet, sondern scheibenförmig auf einer von der Erregerspule abgewandten Seite angeordnet und axial magnetisiert.

In einem unbestromten Zustand des Elektromagneten teilen sich die Feldlinien in dem Flansch in einen Magnetkreis durch das Gehäuse um die Erregerspule in einen Hauptfluss und einen Nebenfluss durch den Luftspalt. In dem Außenringabschnitt vereinigen sich der Hauptfluss und der Nebenfluss und fließen gemeinsam über den Magnetpol in die Ankerplatte und zurück zum Permanentmagnet. Die Reluktanzkraft zieht die Ankerplatte gegen den Magnetpol, wodurch die Bremse geschlossen ist.

Im bestromten Zustand des Elektromagneten wird die Erregerspule mit einem Gleichstrom bestromt und das Magnetfeld der Erregerspule verdrängt und leitet das magnetische Feld des Permanentmagneten im Bereich des Magnetpols und der Ankerplatte um. Die Bremse kann somit gelüftet werden. Das heißt, die Bremse öffnet und die z.B. Motorwelle könnte sich wieder drehen.

Ein weiterer Aspekt der vorliegenden Erfindung betrifft ein Verfahren zur Herstellung eines elektromagnetischen Erregersystems für eine elektromagnetische Bremse oder Kupplung, insbesondere für die zuvor beschriebene elektromagnetische Bremse oder Kupplung, mit einem Elektromagneten und einem Permanentmagneten, mit folgenden Verfahrensschritten:
- Bereitstellen eines topf- und ringförmigen Gehäuses mit einer Längsachse, einem Innenringabschnitt, einem Außenringabschnitt und einem den Innenringabschnitt und den Außenringabschnitt verbindenden Bodenabschnitt;
- Bereitstellen eine Erregerspule;
- Einsetzen der Erregerspule in das Gehäuse zwischen den Innenringabschnitt und den Außenringabschnitt zur Bildung des Elektromagneten;
- Bereitstellen eines Flansches mit einem auf einer Stirnseite des Flansches angeordneten scheibenförmigen Permanentmagnet; und
- Anordnen des Flansches an dem Gehäuse derart, dass der Permanentmagnet auf der von der Erregerspule abgewandten Seite angeordnet ist und dass der Flansch von dem Innenringabschnitt zum Außenringabschnitt unter Ausbildung eines Luftspaltes zwischen dem Flansch und dem Außenringabschnitt absteht.

Das Verfahren zur Herstellung eines elektromagnetischen Erregersystems, insbesondere eines elektromagnetischen Erregersystems für eine elektromagnetische Bremse, zeichnet sich dadurch aus, dass es eine einfache und kostengünstige Herstellung eines besonders kompakten Erregersystems für eine elektromagnetische Bremse ermöglicht. Insbesondere kann bei diesem Verfahren auf weitere Befestigungsmittel verzichtet werden und alle Bauteile können, vorzugsweise in einem Arbeitsgang, kraftschlüssig miteinander verbunden werden.

Eine Weiterbildung des erfindungsgemäßen Verfahrens sieht vor, dass zur Bereitstellung des Flansches der Permanentmagnet auf die Stirnseite des Flansches aufgeklebt, aufgesintert oder aufgespritzt wird. Beispielsweise kann eine Vielzahl von Permanentmagneten auf die Stirnseite aufgeklebt oder ein kunststoffgebundener Magnet in einer dünnen Schicht auf die Stirnseite aufgespritzt werden, wobei vorzugsweise die Magnetisierung axial, d.h. entlang der Längsachse erfolgt.

Der Permanentmagnet ist vorzugsweise scheibenförmig, wobei noch weiter bevorzugt der Permanentmagnet in der Längsachse eine Dicke aufweist, die kleiner ist als eine Dicke des Flansches.

Bevorzugt wird der Permanentmagnet gemäß einer Weiterbildung erst nach dem Anordnen auf die Stirnseite des Flansches magnetisiert.

Eine Weiterbildung der vorliegenden Erfindung sieht vor, dass der Flansch mit dem Gehäuse verbunden wird. Beispielsweise kann der Flansch an dem Gehäuse durch Kleben, Klemmen, Schweißen, Löten oder mittels weiteren Befestigungsmittel wie Schrauben, Nieten, o.Ä. befestigt werden.

Insbesondere ist es bevorzugt, wenn der Flansch in das Gehäuse eingesetzt wird.

Beim Einsetzen des Flansches wird der Flansch zwischen dem Innenringabschnitt und dem Außenringabschnitt in dem Gehäuse unter Ausbildung des Luftspaltes angeordnet. Dabei wird der Flansch mit dem Permanentmagneten so weit in das Gehäuse eingesetzt, bis der Permanentmagnet und/oder ein freies Ende des Innenringabschnitts gegenüber dem Magnetpol in der Längsachse zurückversetzt angeordnet ist. Anders ausgedrückt ist ein Abstand in der Längsachse zwischen dem Permanentmagnet und der Erregerspule und/oder ein Abstand zwischen dem einen freien Ende des Innenringabschnitts und der Erregerspule kleiner als ein Abstand zwischen dem Magnetpol und der Erregerspule.

Wird z.B. das elektromagnetische Erregersystem zur Bildung einer Bremse oder Kupplung mit einer Ankerplatte verwendet, die mit dem Elektromagneten und dem Dauermagneten zusammenwirkt, so kommt die Ankerplatte im geschlossenen Zustand der Bremse oder Kupplung nur mit dem Magnetpol - also am freien Ende des Außenringabschnittes des Gehäuses - in Berührung und nicht mit dem Permanentmagnet.

Bevorzugt wird der Flansch in das Gehäuse eingepresst, wobei noch weiter bevorzugt zwischen dem Flansch und dem Gehäuse, insbesondere dem Innenringabschnitt, eine Pressverbindung hergestellt wird, wodurch der Flansch an dem Gehäuse besonders fest angeordnet ist.

Eine Weiterbildung der vorliegenden Erfindung sieht vor, dass beim Einsetzen der Erregerspule die Erregerspule kraftschlüssig mit dem Gehäuse verbunden wird. Beispielsweise können der Innenringabschnitt, der Außenringabschnitt und/oder die Erregerspule geeignete Oberflächenstrukturen, wie z. B. eine Riffelung, aufweisen, mittels derer die Erregerspule kraftschlüssig im Gehäuse angeordnet werden kann.

Darüber hinaus hat es sich als vorteilhaft erwiesen, wenn die Erregerspule einen Spulenträger und Spulenwicklungen umfasst. Der Spulenträger ist bevorzugt aus einem elektrisch isolierenden Werkstoff wie z.B. Kunststoff hergestellt und die Spulenwicklungen sind auf dem Spulenträger angeordnet bzw. auf diesem aufgewickelt. Weiterhin ist es bevorzugt, wenn der Spulenträger mindestens einen Deformationsbereich aufweist, der beim Einsetzen der Erregerspule in das Gehäuse derart verformt wird, dass die Erregerspule kraftschlüssig in dem Gehäuse angeordnet wird.

Der mindestens eine Deformationsbereich kann beispielsweise mindestens eine auf der von der Spulenwicklungen abgewandten Seite abstehenden Erhebung oder mindestens eine Noppe umfassen, wobei die mindestens eine Erhebung oder die mindestens eine Noppe beim Einsetzen der Erregerspule in das Gehäuse verformt bzw. eingedrückt wird und eine Verformung des Spulenträgers verursacht, die zu einem Kraftschluss zwischen der Erregerspule und dem Gehäuse führt.

Weiterhin ist es vorteilhaft, wenn beim Einsetzen, noch weiter bevorzugt beim Einpressen des Flansches, der Kraftschluss zwischen der Erregerspule und dem Gehäuse hergestellt wird. Beispielsweise kann die Erregerspule zunächst lose in das Gehäuse eingesetzt werden. Der Kraftschluss zwischen der Erregerspule und dem Gehäuse erfolgt beim Einpressen des Flansches, indem der Flansch die Erregerspule gegen den Bodenabschnitt drückt und die Erregerspule bzw. der mindestens eine Deformationsbereich in dem Gehäuse derart verformt wird, dass die Erregerspule kraftschlüssig in dem Gehäuse angeordnet wird.

Nachfolgend wird unter Bezugnahme auf die begleitenden Zeichnungen ein Ausführungsbeispiel im Detail beschrieben. Es zeigen:
- Figur 1: eine Schnittdarstellung einer gelüfteten elektromagnetischen Bremse mit einem Erregersystem und einem Anker,
- Figur 2a: das elektromagnetische Erregersystem der elektromagnetischen Bremse gemäß Figur 1,
- Figur 2b: eine Detaildarstellung des elektromagnetische Erregersystems gemäß Figur 2a,
- Figur 3: eine schematische Detaildarstellung des magnetischen Flusses in der gelüfteten elektromagnetischen Bremse gemäß Figur 1,
- Figur 4: eine schematische Detaildarstellung des magnetischen Flusses in der gelüfteten elektromagnetischen Bremse, und
- Figur 5: eine Detaildarstellung einer Erregerspule des Erregersystems gemäß den Figuren 1 - 4 vor dem Einsetzen in das Gehäuse.

Gleiche oder funktional gleiche Teile oder Merkmale werden in der nachfolgenden detaillierten Beschreibung der Figuren mit den gleichen Bezugszeichen gekennzeichnet. Ebenso sind in den Figuren nicht alle gleichen oder funktional gleichen Teile oder Merkmale mit einer Bezugsziffer versehen.

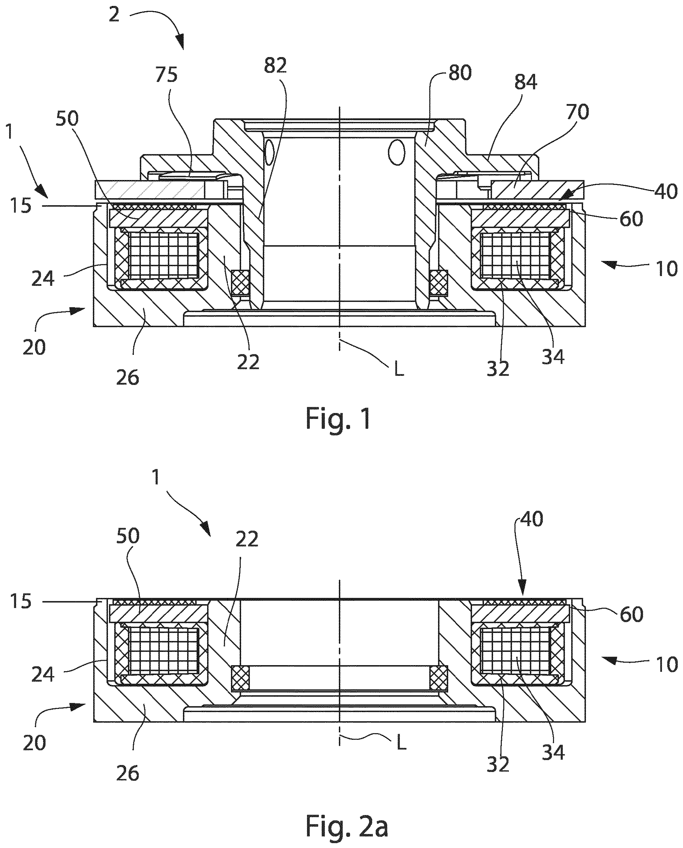

Figur 1 zeigt eine beispielhafte Ausführungsform einer elektromagnetischen Bremse 2 mit einem elektromagnetischen Erregersystem 1.

Das elektromagnetische Erregersystem 1 der elektromagnetischen Bremse 2 gemäß Figur 1 ist detailliert in Figur 2a dargestellt und weist einen Elektromagneten 10 und einen Permanentmagneten 40 auf.

Der Elektromagnet 10 umfasst ein um eine Längsachse L topfförmig und ringförmig ausgebildetes Gehäuse 20. Das Gehäuse 20 ist vorzugsweise im Wesentlichen rotationssymmetrisch ausgebildet, wobei die Längsachse L die Symmetrieachse bildet.

Das topfförmige und ringförmige Gehäuse 20 kann aus einem weichmagnetischen Material hergestellt sein und weist einen Innenringabschnitt 22, einen Außenringabschnitt 24 und einen den Innenringabschnitt 22 und den Außenringabschnitt 24 verbindenden Bodenabschnitt 26 auf.

Der Innenringabschnitt 22 und der Außenringabschnitt 24 sind einenends mit dem Bodenabschnitt 26 verbunden und stehen von dem Bodenabschnitt 26 ab und weisen anderenends jeweils ein freies Ende auf. Mit anderen Worten weist das Gehäuse 20 eine axiale Ringnut zur Aufnahme der Erregerspule 30 auf.

Das freie Ende des Außenringabschnitts 24 bildet einen Magnetpol 15.

Die Erregerspule 30 ist in das Gehäuse 20 eingesetzt, wobei die Erregerspule 30 zwischen dem Innenringabschnitt 22 und dem Außenringabschnitt 24, also in der axialen Ringnut, in das Gehäuse 20 eingesetzt ist.

Die Erregerspule 30 umfasst einen Spulenträger 32 und Spulenwicklungen 34. Die Spulenwicklungen 34 sind vorzugsweise auf dem Spulenträger 32 aufgewickelt, wobei der Spulenträger 32 vorzugsweise ein elektrisch isolierendes Material, beispielsweise Kunststoff, umfasst oder aus einem elektrisch isolierenden Material hergestellt ist.

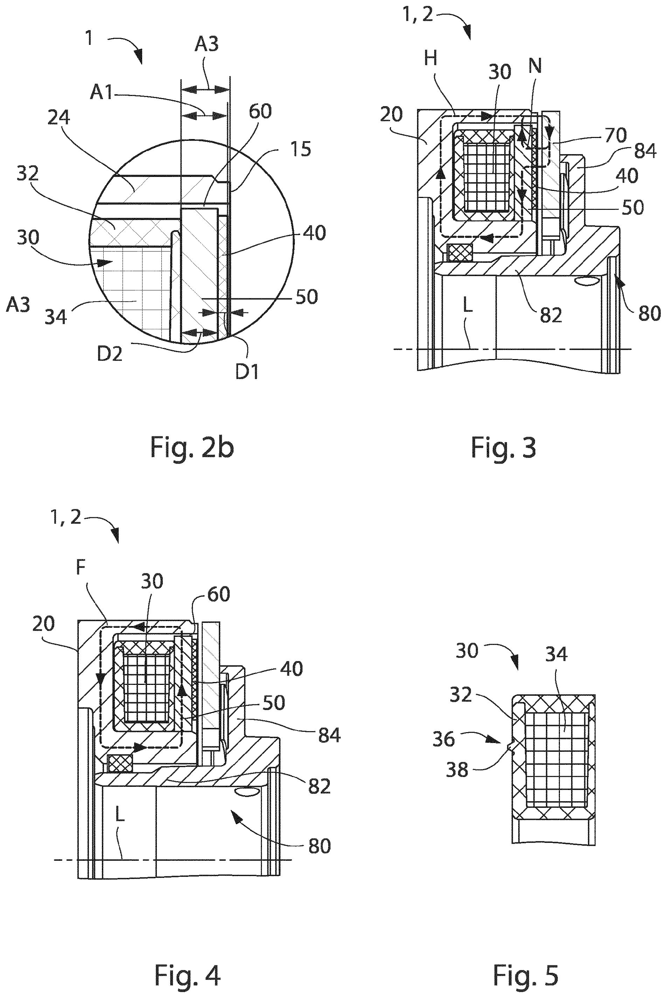

Der Spulenträger 32 kann mindestens einen Deformationsbereich 36 aufweisen, siehe Figur 5, der sich beim Einsetzen der Erregerspule 30 in das Gehäuse 20 verformt und einen Kraftschluss zwischen der Erregerspule 30 und dem Gehäuse 20, insbesondere dem Innenringabschnitt 22 und/oder dem Außenringabschnitt 24, herstellt.

Der mindestens eine Deformationsbereich 36 umfasst einen im Schnitt wellenförmig ausgebildeten Abschnitt mit mindestens einer vorstehenden Erhebung 38 oder mit einer oder mehreren Noppen. Die Erhebung 38 wird beim Einführen der Erregerspule 30 in das Gehäuse 20 eingedrückt und bewirkt eine Deformation des Spulenträgers 32, die zu dem Kraftschluss zwischen der Erregerspule 30 und dem Gehäuse 20 führt.

Darüber hinaus umfasst das elektromagnetische Erregersystem 1 einen Flansch 50, wobei der Flansch 50 vorzugsweise aus einem weichmagnetischen Werkstoff hergestellt ist. Auf einer der Stirnseiten des Flansches 50 ist der Permanentmagnet 40 bevorzugt fest angeordnet. Der Flansch 50 und der Permanentmagnet 40 können somit fest miteinander verbunden sein und eine Einheit bilden.

Der Permanentmagnet 40 ist bevorzugt scheibenförmig, genauer gesagt eine Ringscheibe, wobei vorzugsweise eine Dicke D1 des Permanentmagneten 40 kleiner und noch bevorzugter um ein Vielfaches kleiner ist als eine Dicke D2 des Flansches 50.

Der Permanentmagnet 40 ist axial magnetisiert, was bedeutet, dass der ringscheibenförmige Permanentmagnet 40 durch die Dicke magnetisiert ist, und seine Pole auf den ebenen Kreisflächen liegen.

Der Permanentmagnet 40 kann ein Hartferrit, ein Samarium-Kobalt-Magnet, ein Neodym-Eisen-Bor-Magnet, ein kunststoffgebundener Hartferrit oder ein kunststoffgebundener Neodym-Eisen-Bor-Magnet sein und kann auf den Flansch 50 geklebt, gespritzt oder gesintert sein.

Der Flansch 50 ist in das Gehäuse 20 eingesetzt, wobei der Permanentmagnet 40 auf der von der Erregerspule 30 abgewandten Seite angeordnet ist.

Insbesondere ist den beigefügten Figuren zu entnehmen, dass der Flansch 50 auf der von dem Bodenabschnitt 26 abgewandten Seite der Erregerspule 30 angeordnet ist und vom Innenringabschnitt 22 zum Außenringabschnitt 24 unter Ausbildung eines Luftspalts 60 zwischen dem Flansch 50 und dem Außenringabschnitt 24 vorsteht.

Im einfachsten Fall kann der Flansch 50 in das Gehäuse 20 bzw. auf den Innenringabschnitt 22 eingepresst werden, wodurch der Flansch 50 fest mit dem Innenringabschnitt 22 verbunden ist.

Die Verbindung weist darüber hinaus keinen nennenswerten magnetischen Widerstand auf.

Alternativ kann der Flansch 50 an dem Gehäuse 20 durch Kleben, Klemmen, Schweißen, Löten oder mittels weiteren Befestigungsmittel wie Schrauben, Nieten, o.Ä. befestigt werden. Auch kann der Flansch 50 an dem Gehäuse 20 durch eine Rändelverbindung befestigt bzw. angeordnet werden.

Der Luftspalt 60 weist einen erhöhten magnetischen Widerstand auf und kann als magnetischer Widerstand und als Nebenluftspalt im magnetischen System, welches später noch beschrieben werden wird, dienen.

Der Permanentmagnet 40 und der Flansch 50 sind vorzugsweise gegenüber dem freien Ende des Außenringabschnitts 24 bzw. dem Magnetpol 15 in dem Gehäuse 20 in der Längsachse L zurückversetzt angeordnet.

Das freie Ende des Innenringabschnitts 22 kann auch in der Längsachse L gegenüber dem freien Ende des Außenringabschnitts 24 bzw. dem Magnetpol 15 in der Längsachse L zurückversetzt angeordnet sein.

Mit anderen Worten kann, wie in Figur 2b gezeigt ist, ein erster Abstand A1, gemessen zwischen dem Permanentmagneten 40 und der Erregerspule 30, und/oder ein zweiter Abstand A2 (nicht gezeigt) zwischen dem freien Ende des Innenringabschnitts 22 und der Erregerspule 30 kleiner sein als ein dritter Abstand A3 zwischen dem Magnetpol 15 und der Erregerspule 30.

Ferner umfasst die elektromagnetische Bremse 2 gemäß Figur 1 eine Ankerplatte 70, die in bekannter Weise mit dem Elektromagneten 10 und dem Permanentmagneten 40 zusammenwirkt. Die Ankerplatte 70 ist in der Längsachse L verschiebbar.

Die Ankerplatte 70 ist ferner an einer Flanschnabe 80 angeordnet, wobei die Ankerplatte 70 mit der Flanschnabe 80 beispielsweise über Federmittel 75 verbunden ist, durch die die Ankerplatte 70 in der Längsachse L verschiebbar ist.

Die Flanschnabe 80 weist einen Nabenabschnitt 82 und einen Flanschabschnitt 84 auf und kann in bekannter Weise beispielsweise mit einer Motorwelle einer Synchronmaschine verbunden werden.

Die Figuren 3 und 4 zeigen schematisch das magnetische System der Permanentmagnetbremse mit dem elektromagnetischen Erregersystem 1.

Unter dem Einfluss des permanentmagnetischen Feldes des Permanentmagneten 40 wird die Ankerplatte 70 kraftschlüssig gegen den Magnetpol 15 gedrückt. Die daraus resultierende Reibkraft erzeugt das Bremsmoment.

In diesem Zustand ist der Elektromagnet 10 des Erregersystems 1 stromlos und der magnetische Fluss des Permanentmagneten 40 teilt sich im Flansch in einen Hauptfluss H und einen Nebenfluss N auf.

Der Hauptfluss H fließt vom Flansch 50 durch das Gehäuse 20 um die Erregerspule 30, also vom Innenringabschnitt 22 durch den Bodenabschnitt 26 zum Außenringabschnitt 24.

Der Nebenfluss N fließt durch den Flansch 50 und über den Luftspalt 60 in den Außenringabschnitt 24.

In dem Außenringabschnitt 24 vereinigen sich der Hauptfluss H und der Nebenfluss N und fließen gemeinsam über den Magnetpol 15 durch die Ankerplatte 70 und den Permanentmagneten 40.

Die Reluktanzkraft zieht die Ankerplatte 70 gegen den Magnetpol 15, wodurch die elektromagnetische Bremse 2 geschlossen wird.

Zum Aufheben der Bremswirkung - also zum Lüften der elektromagnetischen Bremse 2 - wird das auf die Ankerplatte 70 einwirkende permanentmagnetische Feld beim Anlegen einer Gleichspannung an die Erregerspule 30 durch ein elektromagnetisches Gegenfeld, wie in Figur 4 gezeigt, verdrängt, umgeleitet, neutralisiert und die elektromagnetische Bremse 1 öffnet, indem die Federmittel 75 die Ankerplatte 70 entlang der Längsachse L von dem Erregersystem 1 wegbewegen und zum Flanschabschnitt 84 der Flanschnabe 80 ziehen. Der magnetische Fluss F fließt durch das Gehäuse 20, den Flansch 50 und den Luftspalt 60.

Das elektromagnetische Erregersystem 1 für die elektromagnetische Bremse 2 oder Kupplung kann besonders einfach und kostengünstig hergestellt werden.

Zunächst werden das topf- und ringförmige Gehäuse 20, die Erregerspule 30 und der Flansch 50 mit dem auf der Stirnseite des Flansches 50 angeordneten ringscheibenförmigen Permanentmagneten 40 bereitgestellt. Anschließend wird die Erregerspule 30 zur Bildung des Elektromagneten zwischen dem Innenringabschnitt 22 und dem Außenringabschnitt 24 in das Gehäuse 20 eingesetzt.

Abschließend wird der Flansch 50 derart an dem Gehäuse 20 angeordnet, dass der Permanentmagnet 40 auf der von der Erregerspule 30 abgewandten Seite angeordnet ist und dass der Flansch 50 von dem Innenringabschnitt 22 zu dem Außenringabschnitt 24 unter Ausbildung eines Luftspaltes 60 zwischen dem Flansch 50 und dem Außenringabschnitt 24 absteht.

Bevorzugt kann der Permanentmagnet 40 auf die Stirnseite des Flansches 50 aufgeklebt, aufgesintert oder aufgespritzt werden, bevor der Flansch 50 an dem Gehäuse 20 angeordnet wird. Hierzu können beispielsweise eine Vielzahl von Permanentmagneten auf die Stirnseite aufgeklebt oder kunststoffgebunden in einer dünnen Schicht auf die Stirnseite aufgespritzt werden, wobei die Magnetisierung axial, d. h. entlang der Längsachse L erfolgt.

Das Anordnen des Flansches 50 an dem Gehäuse 20 kann durch ein Einpressen des Flansches 50 in das Gehäuse 20 erfolgen, wobei der Flansch 50 vorzugsweise auf den Innenringabschnitt 22 aufgepresst wird.

Dabei wird der Flansch 50 mit dem Permanentmagneten 40 soweit in das Gehäuse 20 geschoben, bis der Permanentmagnet 40 und der Flansch 50 in der Längsachse L gegenüber dem Magnetpol 15 zurückversetzt angeordnet sind.

Beim Einsetzen der Erregerspule 30 kann die Erregerspule 30 kraftschlüssig mit dem Gehäuse 20 verbunden werden. Hierzu kann beispielsweise der Deformationsbereich 36 beim Einsetzen der Erregerspule 30 in das Gehäuse 20 verformt werden, wobei diese Verformung beim Einpressen oder Einsetzten des Flansches 50 erfolgen kann.

### Bezugszeichenliste

- 1: Erregersystem
- 2: Bremse
- 10: Elektromagnet
- 15: Magnetpol
- 20: Gehäuse
- 22: Innenringabschnitt
- 24: Außenringabschnitt
- 26: Bodenabschnitt
- 30: Erregerspule
- 32: Spulenträger
- 34: Spulenwicklungen
- 36: Deformationsbereich
- 38: Erhebung
- 40: Permanentmagnet
- 50: Flansch
- 60: Luftspalt
- 70: Ankerplatte
- 75: Federmittel
- 80: Flanschnabe
- 82: Nabenabschnitt
- 84: Flanschabschnitt

- A1: erster Abstand
- A2: zweiter Abstand
- A3: dritter Abstand
- F: magnetischer Fluss
- H: Hauptfluss
- L: Längsachse
- N: Nebenfluss

## Patentansprüche

1. Elektromagnetisches Erregersystem (1) für eine elektromagnetische Bremse (2) oder Kupplung, aufweisend einen Elektromagneten (10) und einen Permanentmagneten (40),
- wobei der Elektromagnet (10) ein um eine Längsachse (L) topfförmiges und ringförmiges Gehäuse (20) mit einem Innenringabschnitt (22), einem Außenringabschnitt (24), einem den Innenringabschnitt (22) und den Außenringabschnitt (24) verbindenden Bodenabschnitt (26) und einer Erregerspule (30) umfasst,
- wobei die Erregerspule (30) in das Gehäuse (20) zwischen den Innenringabschnitt (22) und den Außenringabschnitt (24) eingesetzt ist, und wobei ein freies Ende des Außenringabschnitts (24) einen Magnetpol (15) bildet,
- wobei der Permanentmagnet (40) auf der von der Erregerspule (30) abgewandten Seite auf einem Flansch (50) angeordnet ist, und
- wobei der Flansch (50) auf der von dem Bodenabschnitt (26) abgewandten Seite der Erregerspule (30) angeordnet ist und von dem Innenringabschnitt (22) zum Außenringabschnitt (24) unter Ausbildung eines Luftspaltes (60) zwischen dem Flansch (50) und dem Außenringabschnitt (24) absteht.

2. Elektromagnetisches Erregersystem (1) nach Anspruch 1, **dadurch gekennzeichnet, dass** der Permanentmagnet (40) und/oder ein freies Ende des Innenringabschnitts (22) gegenüber dem Magnetpol (15) in der Längsachse (L) zurückversetzt angeordnet ist.

3. Elektromagnetisches Erregersystem (1) nach Anspruch 1 oder 2,
**dadurch gekennzeichnet, dass** der Flansch (50) in das Gehäuse (20) eingepresst ist.

4. Elektromagnetisches Erregersystem (1) nach einem der vorgenannten Ansprüche,
**dadurch gekennzeichnet, dass** der Permanentmagnet (40) ein Hartferrit, ein Samarium-Kobalt-Magnet, ein Neodym-Eisen-Bor-Magnet, ein kunststoffgebundener Hartferrit oder ein kunststoffgebundener Neodym-Eisen-Bor-Magnet ist.

5. Elektromagnetisches Erregersystem (1) nach einem der vorgenannten Ansprüche,
**dadurch gekennzeichnet, dass** der Permanentmagnet (40) auf den Flansch aufgeklebt, aufgespritzt oder aufgesintert ist.

6. Elektromagnetisches Erregersystem (1) nach einem der vorgenannten Ansprüche,
**dadurch gekennzeichnet, dass** der Luftspalt (60) als magnetischer Widerstand und als Nebenluftspalt in einem Magnetkreis des Permanentmagneten (40) wirkt.

7. Elektromagnetisches Erregersystem (1) nach einem der vorgenannten Ansprüche,
**dadurch gekennzeichnet, dass** das Gehäuse (20) mit dem Innenringabschnitt (22), dem Außenringabschnitt (24) und dem Bodenabschnitt (26) einstückig ausgebildet ist.

8. Elektromagnetisches Erregersystem (1) nach einem der vorgenannten Ansprüche,
**dadurch gekennzeichnet, dass** die Erregerspule (30) einen Spulenträger (32) und Spulenwicklungen (34) umfasst, und dass der Spulenträger (32) mindestens einen Deformationsbereich (36) aufweist, der beim Einsetzen der Erregerspule (30) in das Gehäuse (20) verformt wird, um einen Kraftschluss zwischen der Erregerspule (30) und dem Gehäuse (20) zu erzeugen.

9. Elektromagnetische Bremse (2) mit einem elektromagnetisches Erregersystem (1) nach einem der vorgenannten Ansprüche
**dadurch gekennzeichnet, dass** eine mit dem Elektromagneten (10) und dem Permanentmagneten (40) zusammenwirkende und entlang der Längsachse (L) verschiebbare Ankerplatte (70) vorgesehen ist.

10. Elektromagnetische Bremse (2) nach Anspruch 9,
**dadurch gekennzeichnet, dass** die Ankerplatte (70) in der Längsachse (L) verschiebbar auf einer Flanschnabe (80) angeordnet ist.

11. Verfahren zur Herstellung eines elektromagnetischen Erregersystems (1) für eine elektromagnetische Bremse (2), insbesondere eines elektromagnetischen Erregersystems (1) nach einem der Ansprüche 1 bis 8 und/oder für eine elektromagnetische Bremse (2) nach einem der Ansprüche 9 bis 10, aufweisend folgende Verfahrensschritte:
- Bereitstellen eines Elektromagneten (10) mit einem topf- und ringförmigen Gehäuse (20) mit einem Innenringabschnitt (22) und einem Außenringabschnitt (24) und mit einer Erregerspule (30);
- Bereitstellen einer Erregerspule (30);
- Einsetzen der Erregerspule (30) in das Gehäuse (20) zwischen dem Innenringabschnitt (22) und dem Außenringabschnitt (24);
- Bereitstellen eines Flansches (50) mit einem auf dem Flansch (50) angeordneten Permanentmagneten (40); und
- Anordnen des Flansches (50) an dem Gehäuse (20) derart, dass der Permanentmagnet (40) auf der von der Erregerspule abgewandten Seite angeordnet ist und dass der Flansch (50) von dem Innenringabschnitt (22) zum Außenringabschnitt (24) unter Ausbildung eines Luftspaltes (60) zwischen dem Flansch (50) und dem Außenringabschnitt (24) absteht.

12. Verfahren nach Anspruch 11,
**dadurch gekennzeichnet, dass** der Permanentmagnet (40) auf den Flansch (50) aufgeklebt, aufgespritzt oder aufgesintert wird.

13. Verfahren nach Anspruch 11 oder 12,
**dadurch gekennzeichnet, dass** der Flansch (50) in das Gehäuse (20) eingesetzt, insbesondere eingepresst, wird.

14. Verfahren nach einem der Ansprüche 11 bis 13,
**dadurch gekennzeichnet, dass** die Erregerspule (30) beim Einsetzen in das Gehäuse (20) kraftschlüssig in dem Gehäuse (20) angeordnet wird.

15. Verfahren nach einem der Ansprüche 11 bis 14,
**dadurch gekennzeichnet, dass** die Erregerspule (30) einen Spulenträger (32) und Spulenwicklungen (34) umfasst, und dass der Spulenträger (32) mindestens einen Deformationsbereich (36) aufweist, der beim Einsetzen der Erregerspule (30) in das Gehäuse (20) verformt wird, um die Erregerspule (30) kraftschlüssig in dem Gehäuse (20) anzuordnen.
